# EUROPÄISCHE PATENTSCHRIFT

(11) **EP 2 117 892 B1**
(45) Veröffentlichungstag und Bekanntmachung des Hinweises auf die Patenterteilung: **22.05.2013**
(21) Anmeldenummer: 07821968.0
(22) Anmeldetag: 29.10.2007
(51) Int. Cl.: B60S 1/34, B60S 1/58

(54) **SCHEIBENWISCHERANTRIEB FÜR FAHRZEUGE**
WINDSHIELD WIPER DRIVE FOR VEHICLES
ENTRAÎNEMENT D'ESSUIE-GLACE POUR VÉHICULES

(30) Priorität: 29.12.2006 DE 102006062588
(43) Veröffentlichungstag der Anmeldung: 18.11.2009
(73) Patentinhaber: Robert Bosch GmbH, 70442 Stuttgart (DE)
(72) Erfinder: REITH, Michael, 77815 Buehl-vimbuch (DE); GABRIEL DE DIAS, Orlando, 76131 Karlsruhe (DE); GEUBEL, Paul, 76534 Baden-baden (DE)
(86) Internationale Anmeldenummer: PCT/EP2007/061612
(87) Internationale Veröffentlichungsnummer: WO 2008/080656

(56) Entgegenhaltungen:
- EP-A- 1 837 256
- EP-A1- 1 837 256
- WO-A-2007/080008
- DE-A1- 10 331 854
- DE-A1- 10 343 572
- DE-A1- 19 546 906
- JP-A- 2000 071 941

## Beschreibung

Die Erfindung bezieht sich auf eine Scheibenwischvorrichtung für Fahrzeuge, insbesondere für Fahrzeuge mit einem Heckscheibenwischer, gemäß dem Oberbegriff des Anspruches 1.

### Stand der Technik

Scheibenwischvorrichtungen für Fahrzeuge sind aus der Praxis in Ausgestaltungen bekannt, bei denen die zum Scheibenwischer führende Abtriebswelle in einem Antriebsgehäuse abgestützt ist, das hinter einer Abdeckung, zum Beispiel auch einer Scheibe liegt, die von der Abtriebswelle durchsetzt ist. Die Abtriebswelle ist in diesem Bereich von einer Schutzkappe umschlossen, die zum Gehäuse abgestützt ist und die am vom Gehäuse abgelegenen Ende dichtend an die Abtriebswelle anschließt.

Die zur Schutzkappe umschließende Anordnung der Abdeckung kann aufgrund von Toleranzen des Fahrzeuges und in der Anordnung des Scheibenwischerantriebes zu Belastungen der Schutzkappe führen, die den dichtenden Anschluss der Schutzkappe zur Abtriebswelle beeinträchtigen, zumal auch im Betrieb des Scheibenwischers, insbesondere in den Umkehrlagen, dynamische Kräfte auftreten, die sich ebenfalls auf den dichtenden Anschluss der Schutzkappe zur Abtriebswelle negativ auswirken können.

Bei einer aus der DE-A-103 31 854 bekannten Scheibenwischvorrichtung ist deren den Wischerarm tragende Abtriebswelle anschließend an den von dieser durchsetzten Gehäuseteil von einer Schutzkappe umschlossen, die an ihrem vom Gehäuseteil abgelegenen Ende über einen zur Abtriebswelle anvulkanisierten Bund festgelegt ist. Diesem axial gegenüberliegend ist die Schutzkappe, umschließend zu einem stirnseitigen, ringförmigen Ansatz des Gehäuseteiles, auf einer Stirnfläche desselben gleitend abgestützt. In gleicher Axialrichtung erfolgt die Abstützung der Abtriebswelle gegen das Gehäuseteil über einen in die Abtriebswelle eingreifenden Sprengring, der gegen den ringförmigen Ansatz über eine von der Schutzkappe umgebene Ringscheibe anliegt..

Anschließend an den die Abtriebswelle führenden Gehäuseteil verläuft die Abtriebswelle bei einer Scheibenwischvorrichtung gemäß der DE-A-103 43 572 innerhalb einer Schutzkappe aus Stahlblech. Die Schutzkappe umgibt eine Stützfeder, die in Richtung auf das wischerseitige Ende der Abtriebswelle über eine axial relativ zur Schutzkappe verschiebliche Stützscheibe gegen einen in die Abtriebswelle eingreifenden Sprengring und in Gegenrichtung gegen eine zum Gehäuseteil stirnseitig anliegende Scheibe abgestützt ist. Dies derart, dass die Abtriebswelle bei einer axialen Beaufschlagung, zum Beispiel bei einem Unfall, entgegen der Abstützung durch die Stützfeder, und gegebenenfalls unter Deformation der Schutzkappe, in Richtung auf das Gehäuseteil verlagerbar ist.

Eine Schutzkappe für den Abschnitt der Abtriebswelle, der über den die Abtriebswelle führenden Gehäuseteil hinausragt, ist für eine Scheibenwischvorrichtung weiter aus der JP-A-2000 071 941 bekannt. Die Schutzkappe weist an ihrem einen Ende gegen die Antriebswelle gerichtete Dichtlippen auf und ist an ihrem anderen Ende, in Umfangsrichtung verrastend, auf einen Anschlussbund des Gehäuseteiles dichtend axial aufgesteckt. Weiter ist es zur gehäuseseitigen Lagerung der Abtriebswelle einer Scheibenwischvorrichtung aus der DE-A-195 46 906 bekannt, die Anbtriebswelle über eine Lagerbuchse in einem Gehäuseteil aufzunehmen und über die Lagerbuchse axial zu fixieren. Dies dadurch, dass die Lagerbuchse an ihrem einen Ende einen sich gegen eine Stirnseite des Gehäuseteils abstützenden, angeformten Anschlagbund und, ergänzend hierzu, einenends in die Abtriebswelle eingreifende und anderenends, gegenüberliegend zum Anschlagbund, zum Gehäuseteil hintergreifende Rastvorsprünge aufweist.

### Offenbarung der Erfindung

Der Erfindung liegt die Aufgabe zugrunde, den dichtenden Anschluss der Schutzkappe zur Abtriebswelle beeinträchtigende Auswirkungen durch, auf die Schutzkappe wirkende Belastungen vermeiden.

Diese Aufgabe wird erfindungsgemäß mit den Merkmalen des Anspruches 1 gelöst. Die Unteransprüche geben zweckmäßige Weiterbildungen an.

Bei der erfindungsgemäßen Scheibenwischvorrichtung wird die Schutzkappe im Übergang zwischen ihren Endbereichen, also im Übergang ihrer Abstützung zum Antriebsgehäuse und ihrem am anderen Ende vorgesehenen dichtenden Anschlusses zur Abtriebswelle radial abgestützt. Dies, den Radialspalt zwischen Abtriebswelle und Schutzkappe überbrückend, über eine gegen die Abtriebswelle abgestützte Stützhülse, so dass auf die Schutzkappe - insbesondere im Bereich ihrer Durchdringung einer Abdeckung - wirkende Kräfte über die Stützlhülse abgefangen werden können und ohne Auswirkung auf den dichtenden Anschluss der Schutzkappe zur Abtriebswelle bleiben.

Die Stützhülse ist axial zur Schutzkappe über einen Ringbund festgelegt. Dieser Ringbund liegt zwischen einer einspringenden

Schulter der Schutzkappe und einer der Schutzkappe zugeordneten, überfahrbaren Rastschulter, die als eingewölbter Wulst gestaltet sein kann, so dass bei entsprechender radialer Elastizität der bevorzugt aus Kunststoff bestehenden Schutzkappe oder des Ringbundes die Fixierung der Stützhülse werkzeuglos und ohne Zusatzteile erreicht werden kann.

Der dichtende Anschluss der Schutzkappe zur Abtriebswelle wird insbesondere durch eine der Schutzkappe zugeordnete Dichtungsanordnung, bevorzugt eine Ringdichtung, etwa einen O-Ring, gebildet.

Axial erfolgt die Abstützung der Ringdichtung durch ein Halteelement, insbesondere ein ringförmiges Halteelement, das zur Schutzkappe axial verrastend oder verspannend festgelegt ist.

Wird die Scheibenwischvorrichtung an Fahrzeugen in Verbindung mit Heckscheiben für Heckscheibenwischer eingesetzt, so liegt das Antriebsgehäuse innenseitig zur Scheibe und die Scheibe wird von der Abtriebswelle durchsetzt, wobei zwischen Scheibe und Schutzkappe ein bevorzugt ringförmiges Dichtelement angeordnet ist und die Gesamtanordnung lange Abtriebswellen mit langem Überstand zur gehäuseseitigen Abstützung erfordern kann. Die Abstützung der Schutzkappe über die Stützhülse erfolgt dann bevorzugt in einem Bereich der Schutzkappe, in dem diese gegen ein umschließendes Bauteil, sei es eine Abdeckung oder eine Scheibe, insbesondere dichtend abgestützt ist.

Weitere Vorteile und zweckmäßige Ausführungen sind den Ansprüchen, der Figurenbeschreibung und den Zeichnungen zu entnehmen. Es zeigen:
- Fig. 1: in einer Schnittdarstellung Teile eines Scheibenwischerantriebes mit Abtriebswelle, und
- Fig. 2: eine vergrößerte Darstellung eines Längsbereiches der Abtriebswelle mit umschließender Schutzkappe und radialer Abstützung der Schutzkappe gegen die Abtriebswelle über ein Stützlager.

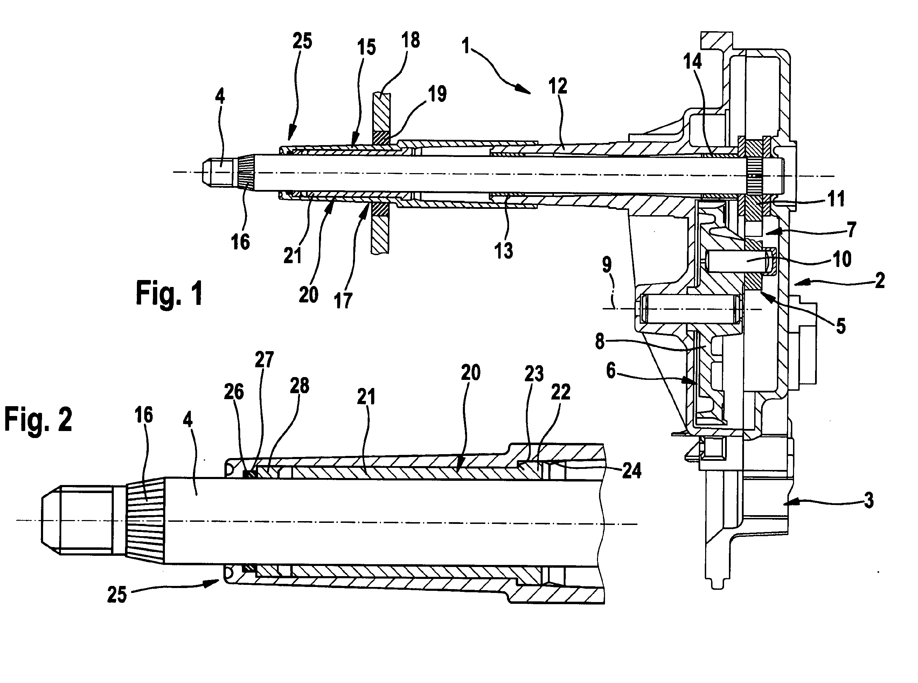

In Fig. 1 ist, teils geschnitten, ein Scheibenwischerantrieb 1 für Fahrzeuge dargestellt. Dies in einer Ausgestaltung, wie sie insbesondere in Verbindung mit Scheibenwischeranordnungen für Heckscheiben von Fahrzeugen vorgesehen ist.

Der Scheibenwischerantrieb 1 umfasst einen nur angedeuteten Motor 3 und ein in dessen Verbindung zu einer Abtriebswelle 4 liegendes Getriebe 5, das einen Schneckentrieb 6 und einen Kurbeltrieb 7 umfasst, der mit der Abtriebswelle 4 verbunden ist. Vom Schneckentrieb 6 ist im Wesentlichen nur das im Antriebsgehäuse 2 gelagerte Schneckenrad 8 gezeigt, das den zur Schneckenradachse 9 achsversetzt liegenden Kurbelzapfen 10 trägt, von dem ausgehend der pendelnde Antrieb einer Schwinge 11 erfolgt, die zur Abtriebswelle 4 drehfest angeordnet ist.

Die Abtriebswelle 4 ist in einem lang gestreckten Hals 12 des Antriebsgehäuses 2 an den einander gegenüberliegenden Halsenden über Lager 13, 14 abgestützt, von denen das Lager 14 gehäuseseitig nahe der Schwinge 11 des Kurbeltriebes 7 angeordnet ist. Über das am freien Ende des Halses 12 angeordnete Lager 13 ragt die Abtriebswelle 4 hinaus, und es ist der über den Hals 12 hinausragende Teil der Abtriebswelle 4 von einer lang gestreckten Schutzkappe 15 bis nahe an das Ende der Abtriebswelle 4 überdeckt, das mit seinem Kerbkonus 16 einen Teil der Anschlussverbindung zu einem nicht dargestellten Scheibenwischerarm bildet.

Wie in Fig. 1 gezeigt durchsetzt die Abtriebswelle 4 im gezeigten Ausführungsbeispiel eine bei 18 angedeutete Heckscheibe eines Fahrzeuges, und es nimmt die Durchbrechung 17 eine die Schutzkappe 15 umschließende und zur Heckscheibe 18 festgelegte Dichtung 19 auf, über die als umschließendes Bauteil die Heckscheibe 18 an die Schutzkappe 15 angeschlossen ist.

In diesem Anschlussbereich ist die lang gestreckte und mit ihrem vom Hals 12 abgelegenen Ende dichtend an die Abtriebswelle 4 anschließende Schutzkappe 15 über ein Stützlager 20 radial gegen die Abtriebswelle 4 abgestützt. Das Stützlager 20 ist erfindungsgemäß als Stützhülse 21 ausgebildet, die anschließend an ihren zylindrischen Hülsenteil einen Ringbund 22 aufweist, der axial zwischen einer einspringenden Schulter 23 der Schutzkappe 15 und einem durch den Ringbund 22 überfahrbaren Rastwulst 24 festgelegt ist und so die axiale Lage des Stützlagers 20 zur Schutzkappe 15 sichert. Gleichzeitig wird über die Stützhülse 21 bei Beaufschlagungen der Schutzkappe 15 über die Dichtung 19, bzw. die Heckscheibe 18 verhindert, dass die Schutzkappe 15 im Bereich ihres dichtenden Anschlusses zur Abtriebswelle 4 Verformungen und/oder Belastungen unterworfen ist, die die angestrebte Abdichtung beeinträchtigen könnten.

Der dichtende Anschluss 25 wird im Ausführungsbeispiel mit einem Dichtelement 26 insbesondere in Form eines O-Rings erreicht, der in dem die Abtriebswelle 4 umschließenden, an die Abtriebswelle 4 radial angrenzenden Ringbereich 27 in einer Ausnehmung angeordnet ist und axial in Richtung auf den Ringbereich 27 über ein Halteelement 28 abgestützt ist. Das Halteelement 28 ist als Ringkörper ausgebildet, der radialen Freigang zur Abtriebswelle 4 aufweist und axial durch Verrastung oder Verspannung zur Schutzkappe 15 festgelegt ist.

Mit der erfindungsgemäßen Lösung lässt sich die Schutzfunktion der Schutzkappe 15 auch dann gewährleisten, wenn lange Bereiche der Abtriebswelle 4 von der Schutzkappe 15 umschließend abgedeckt sind und auch infolge der großen Kraglänge der Abtriebswelle 4 Toleranzen, Relativbewegungen und auch Schwingungen große Ausschläge der Abtriebswelle 4 und der damit verbundenen Schutzkappe 15 bedingen.

## Patentansprüche

1. Scheibenwischvorrichtung (1) für Fahrzeuge, insbesondere für Fahrzeuge mit einem Heckscheibenwischer, mit einer zum Antriebsgehäuse (2) abgestützten Abtriebswelle (4), die eine Schutzkappe (15) durchsetzt, welche zum Antriebsgehäuse (2) abgestützt ist und an ihrem vom Antriebsgehäuse (2) abgelegenen Ende dichtend an die Abtriebswelle (4) anschließt,
**dadurch gekennzeichnet, dass** die Schutzkappe (15) zwischen ihrer Abstützung zum Antriebsgehäuse (2) und ihrem dichtenden Anschluss (25) zur Abtriebswelle (4) auf der Abtriebswelle (4) über eine Stützhülse (21) abgestützt ist, die axial zur Schutzkappe (15) festgelegt ist.

2. Scheibenwischvorrichtung nach Anspruch 1,
**dadurch gekennzeichnet, dass** die Stützhülse (21) über einen zur Schutzkappe (15) abgestützten Ringbund (22) zwischen einer Schulter (23) und einem Rastwulst (24) der Schutzkappe (15) axial festgelegt ist.

3. Scheibenwischvorrichtung nach Anspruch 2,
**dadurch gekennzeichnet, dass** der Ringbund (22) anschließend an einen zylindrischen Teil der Stützhülse (4) vorgesehen ist.

4. Scheibenwischvorrichtung nach einem der vorhergehenden Ansprüche, **dadurch gekennzeichnet, dass** die Schutzkappe (15) zum Antriebsgehäuse (2) auf einem von der Abtriebswelle (4) durchsetzten Gewindehals (12) abgestützt ist.

5. Fahrzeug mit einer Scheibenwischvorrichtung nach einem der vorhergehenden Ansprüche,
**dadurch gekennzeichnet, dass** die Schutzkappe (15) der Scheibenwischvorrichtung im Bereich der Stützhülse (21) gegen ein zur Schutzkappe (15) umschließendes Bauteil abstülzbar ist.

6. Fahrzeug nach Anspruch 5,
**dadurch gekennzeichnet, dass** als umschließendes Bauteil eine Abdeckung oder eine Scheibe, insbesondere Heckscheibe (18), vorgesehen werden kann.

7. Fahrzeug nach Anspruch 5,
**dadurch gekennzeichnet, dass** als umschließendes Bauteil eine zwischen Heckscheibe (18) und Schutzkappe (15) liegende Dichtung (19) vorgesehene werden kann.

## Claims

1. Windscreen wiper device (1) for vehicles, in particular for vehicles with a rear window wiper, with an output shaft (4) which is supported with respect to the drive housing (2) and passes through a protective cap (15), which is supported with respect to the drive housing (2) and, at the end thereof which is remote from the drive housing (2), is connected to the output shaft (4) in a sealing manner, **characterized in that** the protective cap (15) is supported between the support thereof with respect to the drive housing (2) and the sealing connection (25) thereof with respect to the output shaft (4) on the output shaft (4) via a supporting sleeve (21), which is fixed axially with respect to the protective cap (15).

2. Windscreen wiper device according to Claim 1, **characterized in that** the supporting sleeve (21) is fixed axially between a shoulder (23) and a latching bead (24) of the protective cap (15) via an annular collar (22) which is supported with respect to the protective cap (15).

3. Windscreen wiper device according to Claim 2, **characterized in that** the annular collar (22) is provided adjoining a cylindrical part of the supporting sleeve (21).

4. Windscreen wiper device according to one of the preceding claims, **characterized in that** the protective cap (15) is supported with respect to the drive housing (2) on a threaded neck (12) through which the output shaft (4) passes.

5. Vehicle with a windscreen wiper device according to one of the preceding claims, **characterized in that** the protective cap (15) of the windscreen wiper device can be supported in the region of the supporting sleeve (21) against a component which surrounds the protective cap (15).

6. Vehicle according to Claim 5, **characterized in that** a covering or a window, in particular rear window (18), can be provided as the surrounding component.

7. Vehicle according to Claim 5, **characterized in that** a seal (19) located between the rear window (18) and protective cap (15) can be provided as the surrounding component.

## Revendications

1. Dispositif d'essuie-glace (1) pour véhicules, en particulier pour véhicules munis d'un essuie-glace arrière, comprenant un arbre de sortie (4) supporté par rapport au boîtier d'entraînement (2), qui traverse un embout de protection (15) qui est supporté par rapport au boîtier d'entraînement (2) et qui se raccorde de manière hermétique à l'arbre de sortie (4) au niveau de son extrémité éloignée du boîtier d'entraînement (2), **caractérisé en ce que** l'embout de protection (15) est supporté entre son support par rapport au boîtier d'entraînement (2) et son raccord hermétique (25) à l'arbre de sortie (4) sur l'arbre de sortie (4) par le biais d'un manchon de support (21) qui est fixé axialement par rapport à l'embout de protection (15).

2. Dispositif d'essuie-glace selon la revendication 1,
**caractérisé en ce que** le manchon de support (21) est fixé axialement par le biais d'un collet annulaire (22) supporté par rapport à l'embout de protection (15) entre un épaulement (23) et un bourrelet d'encliquetage (24) de l'embout de protection (15).

3. Dispositif d'essuie-glace selon la revendication 2,
**caractérisé en ce que** le collet annulaire (22) est prévu de manière à se raccorder à une partie cylindrique du manchon de support (21).

4. Dispositif d'essuie-glace selon l'une quelconque des revendications précédentes,
**caractérisé en ce que** l'embout de protection (15) est supporté par rapport au boîtier d'entraînement (2) sur un col fileté (12) traversé par l'arbre de sortie (4).

5. Véhicule comprenant un dispositif d'essuie-glace selon l'une quelconque des revendications précédentes,
**caractérisé en ce que** l'embout de protection (15) du dispositif d'essuie-glace peut être supporté dans la région du manchon de support (21) contre un composant périphérique par rapport à l'embout de protection (15).

6. Véhicule selon la revendication 5,
**caractérisé en ce que** l'on peut prévoir en tant que composant périphérique un recouvrement ou une vitre, en particulier une vitre arrière (18).

7. Véhicule selon la revendication 5,
**caractérisé en ce que** l'on peut prévoir en tant que composant périphérique un joint d'étanchéité (19) situé entre la vitre arrière (18) et l'embout de protection (15).
